# EUROPEAN PATENT APPLICATION

(11) **EP 4 756 588 A1**
(43) Date of publication of application: **10.06.2026**
(21) Application number: 24847683.0
(22) Date of filing: 06.05.2024
(51) Int. Cl.: G06F 3/042, G09F 9/30

(54) **DISPLAY DEVICE**

(30) Priority: 31.07.2023 CN 202322040346 U
(71) Applicant: Shenzhen Huasheng Software Technology Co., Ltd., Shenzhen, Guangdong 518101 (CN); TCL Business Information Technology (Huizhou) Co. Ltd., Huizhou, Guangdong 516006 (CN)
(72) Inventor: CHEN, Zhongxu, Shenzhen, Guangdong 518101 (CN); YE, Xiongbo, Shenzhen, Guangdong 518101 (CN)
(74) Representative: Murgitroyd & Company
(86) International application number: PCT/CN2024/091249
(87) International publication number: WO 2025/025717

(57) **Abstract**

A display device is disclosed. The display device includes a front frame assembly, a cover glass, and an infrared assembly. The front frame assembly is configured with a front decorative edge. The infrared assembly, the cover glass, and the front decorative edge are sequentially arranged along a display direction of the display device, and the edge portion of the cover glass is obscured by the front decorative edge, while at least part of the infrared assembly is covered by the cover glass.

## Description

This application claims priority to Chinese Application No. 202322040346.1, entitled "DISPLAY DEVICE", filed to the China National Intellectual Property Administration on July 31, 2023. The entire disclosures of the above application are incorporated herein by reference.

### TECHNICAL FIELD

The present disclosure relates to a field of display technologies, and more particularly, to a display device.

### BACKGROUND

An infrared touchscreen includes infrared emission and reception sensing elements mounted on its frame, constituting an infrared detection grid on the screen surface. Touching the screen alters infrared rays at the contact point to enable touch operations.

### TECHNICAL PROBLEM

In related technologies, infrared touchscreens have wide bezels, reducing visual flatness and overall screen-to-body ratio.

### SUMMARY

The present disclosure provides a display device, which may achieve narrowed bezels, improved visual flatness, and increased screen-to-body ratio.

The display device includes a front frame assembly, a cover glass, and an infrared assembly. The front frame assembly is configured with a front decorative edge. The infrared assembly, the cover glass, and the front decorative edge are sequentially arranged along a display direction of the display device. An edge portion of the cover glass is obscured by the front decorative edge, and at least a partial area of the infrared assembly is obscured by the cover glass.

In some embodiments, the display device further includes a filter element disposed between the front decorative edge and the cover glass; the infrared assembly includes a circuit board and an infrared component disposed on the circuit board, the circuit board is located on a side of the cover glass away from the front decorative edge, and the infrared component is oriented toward the filter element.

In some embodiments, the front frame assembly includes multiple front frame members each including the front decorative edge, a rear support edge, and a sidewall. The front decorative edge, the sidewall, and the rear support edge are connected sequentially to define a mounting groove, with an opening of the mounting groove facing another front frame member which is spaced apart from a front frame member where the mounting groove is located, and the edge portion of the cover glass, the filter element and the infrared assembly are respectively embedded in the mounting groove.

In some embodiments, the cover glass has a light-entry surface, a light-exit surface, and a peripheral surface. The light-entry surface, the light-exit surface are oppositely arranged along a thickness direction of the cover glass, and the peripheral surface connects the light-entry surface and the light-exit surface. And the filter element is disposed between the sidewall and the peripheral surface, and orthographic projection of the infrared component on a plane of the cover glass is located outside the cover glass.

In some embodiments, the rear support edge includes a first sub-edge and a second sub-edge arranged perpendicularly or obliquely to each other. The sidewall, the first sub-edge, and the second sub-edge are connected sequentially to define a sub-mounting groove. And the circuit board is embedded in the sub-mounting groove

In some embodiments, the display device further includes a support pressure bar, which is abutted against a light-entry surface of the cover glass. And the support pressure bar is bent to define an embedded groove portion, and the rear support edge and the circuit board are embedded in the embedded groove portion respectively

In some embodiments, the display device further includes a support pressure bar. And the support pressure bar, the cover glass, the filter element, and the front decorative edge are sequentially pressed together along the display direction of the display device.

In some embodiments, the support pressure bar is adhesively fixed to a light-entry surface of the cover glass.

In some embodiments, the circuit board is parallel to the cover glass.

In some embodiments, the filter element includes sequentially arranged a first light-guiding portion, a reflection portion, and a second light-guiding portion. The first light-guiding portion is arranged towards the infrared component, while the reflection portion is configured to reflect infrared light between the first light-guiding portion and the second light-guiding portion, and the second light-guiding portion is pressed against a light-exit surface of the cover glass.

In some embodiments, a surface of the first light-guiding portion facing the infrared component is parallel to the light-exit surface of the cover glass, a surface of the second light-guiding portion away from the reflection portion is perpendicular to the light-exit surface of the cover glass, and an included angle between the reflection surface of the reflection portion and the light-exit surface of the cover glass is 45 degrees.

### BENEFICIAL EFFECTS

According to the present disclosure, the infrared assembly, the cover glass and the front decorative edge are sequentially arranged along a display direction of the display device, and the infrared assembly is arranged by utilizing the space at one side of the cover glass far from the front decorative edge, so that the infrared assembly is completely or at least partially arranged at one side of the cover glass far from the front decorative edge, and the size of the infrared assembly protruding out of the cover glass along the length and width direction of the display device is correspondingly reduced. Further, the width of the front decorative edge for covering the infrared assembly is compressed, so that the display device presents a nearly flat visual effect based on the narrow front decorative edge, and at the same time, the overall screen -to-body ratio of the display device is improved.

### BRIEF DESCRIPTION OF DRAWINGS

In order to more clearly explain the technical solutions in the embodiments of the present disclosure, the following will briefly introduce the drawings required in the description of the embodiments. Obviously, the drawings in the following description are only some embodiments of the present disclosure. For those skilled in the art, without paying any creative work, other drawings could be obtained based on these drawings.
FIG.1 is a partial sectional structural diagram of a display device according to an embodiment of the present disclosure.
FIG.2 is a projection structural diagram of a filter element of a display device according to an embodiment of the present disclosure.

In which, the reference numeral indicates:
1- front frame assembly, 11- front frame member, 111- front decorative edge, 112- rear support edge, 1121- first sub-edge, 1122- second sub-edge, 113- sidewall, 114- mounting groove, 1141- sub-mounting groove, 2- cover glass, 21- light-entry surface, 22- light-exit surface, 23- peripheral surface, 3-infrared assembly, 31- circuit board, 32- infrared component, 4-filter element, 41- first light-guiding portion, 42- reflection portion, 43- second light-guiding portion, 5- support pressure bar, 51- embedded groove portion, 6- display screen, 7- middle frame, 81- double-sided adhesive, 82- foam member, 9-backplate.

### DETAILED DESCRIPTION

The following clearly and completely describes the technical solutions in the embodiments of the present disclosure with reference to the accompanying drawings. Obviously, the described embodiments are merely a part of the embodiments of the present disclosure, rather than all of them. Based on the embodiments in the present disclosure, all other embodiments obtained by those skilled in the art without creative efforts shall fall within the protection scope of the present disclosure.

In the description of the present disclosure, it should be understood that orientation or positional relationships indicated by terms such as "center," "longitudinal," "transverse," "length," "width," "thickness," "upper," "lower," "front," "rear," "left," "right," "vertical," "horizontal," "top," "bottom," "inner," and "outer" are based on orientation or positional relationships shown in the drawings. These terms are used only for ease of describing the present disclosure and simplifying the description, and do not indicate or imply that the referred device or element must have a specific orientation or be constructed and operated in a specific orientation. Therefore, they should not be construed as limiting the present disclosure. Furthermore, terms "first" and "second" are used for descriptive purposes only and should not be interpreted as indicating or implying relative importance or implicitly specifying the quantity of the indicated technical features. Thus, features defined with "first" or "second" might explicitly or implicitly include one or more of the features. In the description of the present disclosure, "multiple" means two or more unless otherwise explicitly specified.

"A and/or B" includes the following three combinations: only A, only B, and a combination of A and B.

The use of "suitable for" or "configured to" in the present disclosure implies open and inclusive language that does not exclude devices applicable to or configured for performing additional tasks or steps. Additionally, the use of "based on" implies openness and inclusivity, as processes, steps, calculations, or other actions "based on" one or more stated conditions or values might in practice be based on additional conditions or values beyond those stated.

In the present disclosure, the term "exemplary" is used to mean "serving as an example, instance, or illustration." Any embodiment described as "exemplary" in the present disclosure is not necessarily to be construed as preferred or advantageous over other embodiments. The following description is provided to enable any person skilled in the art to make and use the present disclosure. Details are set forth for explanatory purposes. It should be understood that those of ordinary skill in the art might recognize that the present disclosure might be implemented without these specific details. In other instances, well-known structures and processes are not elaborated to avoid unnecessary details obscuring the description of the present disclosure. Therefore, the present disclosure is not intended to be limited to the illustrated embodiments but is to be accorded the widest scope consistent with the principles and features disclosed herein.

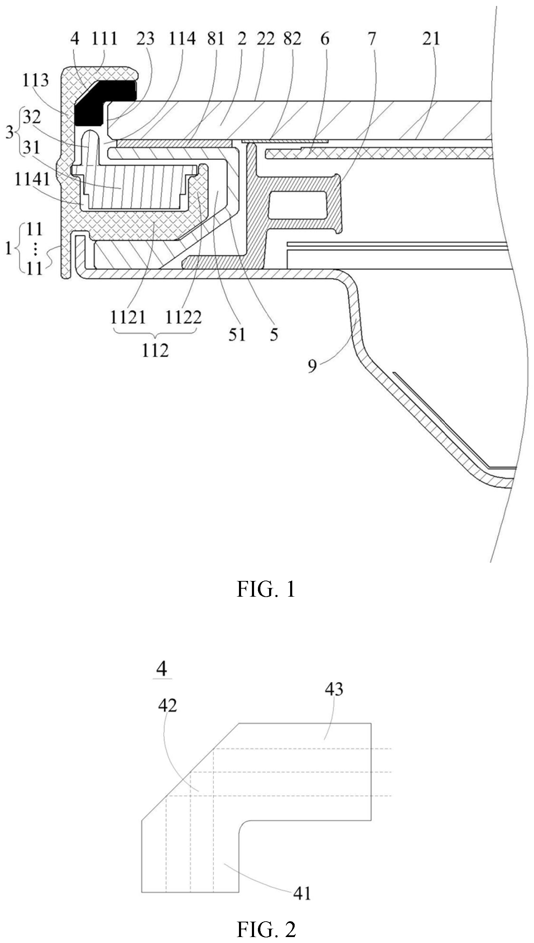

As shown in FIG.1, the present disclosure provides a display device. The display device included a front frame assembly 1, a cover glass 2, and an infrared assembly 3. The display device could achieve narrowed bezels, thereby improving visual flatness and overall screen-to-body ratio.

The front frame assembly 1 is configured with a front decorative edge 111. The infrared assembly 3, the cover glass 2, and the front decorative edge 111 are sequentially arranged along a display direction of the display device. The display direction of the display device refers to a light-exit direction of the display device, i.e., a thickness direction of the display device. An edge portion of the cover glass 2 is obscured by the front decorative edge 111, and at least a partial area of the infrared assembly 3 is obscured by the cover glass 2.

In other words, along a display direction of the display device, the infrared assembly 3, the cover glass 2, and the front decorative edge 111 are arranged sequentially from back to front, with the cover glass 2 blocking at least a partial area between the infrared assembly 3 and the front decorative edge 111. This causes the edge portion of the cover glass 2 to be obscured by the front decorative edge 111, while all or at least a partial area of the infrared assembly 3 is obscured by the edge portion of the cover glass 2, thereby allowing the front decorative edge 111 to decoratively obscure the infrared assembly 3.

Thus, the space on the side of the cover glass 2 away from the front decorative edge 111 could be utilized to arrange the infrared assembly 3, placing all or part of the infrared assembly 3 on the side of the cover glass 2 away from the front decorative edge 111. This reduces the dimension by which the infrared assembly 3 protrudes beyond the cover glass 2 along the length or width direction of the display device, thereby compressing the width dimension of the front decorative edge 111 used to cover the infrared assembly 3. Consequently, the display device achieves a nearly pure flat visual effect with a narrower front decorative edge 111 while increasing the overall screen-to-body ratio.

In some embodiments, the display device might further include a filter element 4 disposed between the front decorative edge 111 and the cover glass 2. The filter element 4 might be tightly abutted against both the front decorative edge 111 and the cover glass 2, or might be arranged apart from either of them. The infrared assembly 3 might include a circuit board 31 and an infrared component 32 disposed on the circuit board 31. The circuit board 31 is located on a side of the cover glass 2 away from the front decorative edge 111, and the infrared component 32 is oriented toward the filter element 4. For an infrared assembly 3 serving as a transmitter, infrared light emitted by the infrared component 32 is guided by the filter element 4 to exit parallel to the cover glass 2, achieving infrared light emission. For an infrared assembly 3 serving as a receiver, infrared light might enter the filter element 4 parallel to the cover glass 2 and be guided by the filter element 4 toward the infrared component 32, achieving infrared light reception. Through the above arrangement, on the one hand, the circuit board 31 could be accommodated in the space on the side of the cover glass 2 far away from the front decorative edge 111, and the width of the front decorative edge 111 could be reduced to achieve the purpose of narrowing the design; on the other hand, the infrared component 32 could be arranged opposite to the filter element 4, facilitating infrared light transmission/reception.

The structure of the front frame assembly 1 might be determined according to actual needs, such as an integrated or spliced construction, which is not limited in the present disclosure. In some embodiments, the front frame assembly 1 might include multiple front frame members 11 spliced together to constitute a frame structure. Each front frame member 11 might include the front decorative edge 111, a rear support edge 112, and a sidewall 113. The front decorative edge 111, the sidewall 113, and the rear support edge 112 are connected sequentially to define a mounting groove 114, with an opening of the mounting groove 114 facing another front frame member 11 which is spaced apart from a front frame member 11 where the mounting groove 114 is located. The edge portion of the cover glass 2, the filter element 4, and the infrared assembly 3 might be embedded in the mounting groove 114, respectively. This allows the front decorative edge 111 to effectively decoratively obscure the filter element 4 and the infrared assembly 3 while securing the cover glass 2, the filter element 4, and the infrared assembly 3 are tightly arranged on the front frame assembly 1.

Exemplarily, the cover glass 2 might have a light-entry surface 21, a light-exit surface 22, and a peripheral surface 23. The light-entry surface 21 and the light-exit surface 22 are oppositely arranged along a thickness direction of the cover glass 2, and the peripheral surface 23 connects the light-entry surface 21 and the light-exit surface 22. The filter element 4 might also be disposed between the sidewall 113 and the peripheral surface 23, and orthographic projection of the infrared component 32 on a plane of the cover glass 2 is located outside the cover glass 2. This ensures that part of the filter element 4 and the infrared component 32 are not obscured by the cover glass 2, allowing them to face each other directly without obstruction for unimpeded infrared light propagation between the filter element 4 and infrared component 32.

The structure of the rear support edge 112 might be determined according to actual needs and is not limited in the present disclosure. Exemplarily, the rear support edge 112 might include a first sub-edge 1121 and a second sub-edge 1122 arranged perpendicularly or obliquely to each other. The sidewall 113, the first sub-edge 1121, and the second sub-edge 1122 are connected sequentially to define a sub-mounting groove 1141, and the circuit board 31 is embedded in the sub-mounting groove 1141. The sub-mounting groove 1141 is part of the mounting groove 114, enabling the circuit board 31 to be tightly embedded in the front frame member 11 for reliable positioning and protection.

In some embodiments, the circuit board 31 might be parallel to the cover glass 2, effectively utilizing the space on the side of the cover glass 2 away from the front decorative edge 111 for layout without increasing or significantly increasing the thickness of the display device.

In some embodiments, the display device might further include a support pressure bar 5, which is abutted against the light-entry surface 21 of the cover glass 2, providing reliable support and positioning for the cover glass 2. Exemplarily, the support pressure bar 5, the cover glass 2, the filter element 4, and the front decorative edge 111 might be sequentially pressed together along the display direction of the display device. The support pressure bar 5 clamps the cover glass 2 from the light-entry surface 21, while the filter element 4 and front decorative edge 111 clamp it from the light-exit surface 22, achieving a secure mounting arrangement.

The structure of the support pressure bar 5 could be determined according to actual needs, which is not limited in the present disclosure. Exemplarily, the support pressure bar 5 might be bent to define an embedded groove portion 51, and the rear support edge 112 and the circuit board 31 are embedded in the embedded groove portion 51 respectively. This creates a tightly wrapped relationship among the support pressure bar 5, the rear support edge 112, and the circuit board 31, improving space utilization on the side of the cover glass 2 away from the front decorative edge 111 and effectively achieving bezel narrowing.

Exemplarily, the support pressure bar 5 might be adhesively fixed to the light-entry surface 21 of the cover glass 2, for instance using double-sided adhesive 81. This establishes both compressive contact and adhesive fixation between the support pressure bar 5 and cover glass 2, enhancing installation reliability.

The structure of the filter element 4 could be determined according to actual needs, which is not limited in the present disclosure. As shown in FIG.1 and FIG.2, in some embodiments, the filter element 4 might include a first light-guiding portion 41, a reflection portion 42, and a second light-guiding portion 43 are sequentially arranged. The first light-guiding portion 41 is arranged towards the infrared component 32, while the reflection portion 42 is configured to reflect infrared light between the first light-guiding portion 41 and the second light-guiding portion 43. The second light-guiding portion 43 is pressed against the light-exit surface 22 of the cover glass 2. For the filter element 4 corresponding to the infrared assembly 3 emitting infrared light, infrared light emitted by the infrared component 32 enters the filter element 4 through the first light-guiding portion 41, gets reflected by the reflection portion 42 between the first light-guiding portion 41 and the second light-guiding portion 43, and exits through the second light-guiding portion 43 parallel to the cover glass 2. For the filter element 4 corresponding to the infrared assembly 3 receiving infrared light, infrared light entering parallel to the cover glass 2 passes through the second light-guiding portion 43, gets reflected by the reflection portion 42, and exits through the first light-guiding portion 41 to reach the infrared receiver, so that the reflection process of infrared light occurs inside the filter element 4.

The arrangement directions of the first light-guiding portion 41, the reflection portion 42, and the second light-guiding portion 43 could be determined according to actual needs, so as to realize the reflective propagation of infrared light between the cover glass 2 and the infrared component 32, which is not limited in the present disclosure. In some embodiments, a surface of the first light-guiding portion 41 facing the infrared component 32 might be parallel to the light-exit surface 22 of the cover glass 2, so that infrared light could pass through the side surface along the normal direction of the side surface. A surface of the second light-guiding portion 43 away from the reflection portion 42 might be perpendicular to the light-exit surface 22 of the cover glass 2, so that infrared light could pass through the side surface along the normal direction of the side surface. An included angle between the reflection surface of the reflection portion and the light-exit surface of the cover glass is 45 degrees for effective reflection. With the above arrangement, the propagation path of infrared light in the filter element 4 could be simplified and the directional reflection propagation effect could be increased.

The type of cover glass 2 could be selected according to actual needs, including tempered glass or sapphire glass, without limitation in the present disclosure.

In some embodiments, the display device might further include a display screen 6, with the light-entry surface 21 of the cover glass 2 facing the display screen 6. The display screen 6 might be an LCD or LED panel without limitation in the present disclosure.

In some embodiments, the display device might further include a middle frame 7 for additional support of the cover glass 2. In some embodiments, a foam member 82 might be disposed between the middle frame 7 and the cover glass 2 for cushioning. In some embodiments, the display device might also include a backplate 9, and the front frame assembly 1 is arranged on the backplate 9 to constitute a housing structure of the display device.

The above describes the display device provided by the embodiments of the present disclosure. Specific examples were used to explain the principles and implementations of the disclosure, serving to enhance understanding of its methodology and core concepts. For those skilled in the art, various modifications to specific embodiments and applications might be made based on these ideas. Therefore, this specification should not be construed as limiting the disclosure.

## Claims

1. A display device, comprising a front frame assembly, a cover glass, and an infrared assembly;
wherein the front frame assembly is configured with a front decorative edge;
wherein the infrared assembly, the cover glass, and the front decorative edge are sequentially arranged along a display direction of the display device;
wherein an edge portion of the cover glass is obscured by the front decorative edge, and at least a partial area of the infrared assembly is obscured by the cover glass.

2. The display device according to claim 1, further comprising a filter element disposed between the front decorative edge and the cover glass;
wherein the infrared assembly comprises a circuit board and an infrared component disposed on the circuit board, the circuit board is located on a side of the cover glass away from the front decorative edge, and the infrared component is oriented toward the filter element.

3. The display device according to claim 2, wherein the front frame assembly comprises multiple front frame members each comprising the front decorative edge, a rear support edge, and a sidewall;
wherein the front decorative edge, the sidewall, and the rear support edge are connected sequentially to define a mounting groove, with an opening of the mounting groove facing another front frame member which is spaced apart from a front frame member where the mounting groove is located;
wherein the edge portion of the cover glass, the filter element and the infrared assembly are respectively embedded in the mounting groove.

4. The display device according to claim 3, wherein the cover glass has a light-entry surface, a light-exit surface, and a peripheral surface; the light-entry surface, the light-exit surface are oppositely arranged along a thickness direction of the cover glass, and the peripheral surface connects the light-entry surface and the light-exit surface;
wherein the filter element is disposed between the sidewall and the peripheral surface, and orthographic projection of the infrared component on a plane of the cover glass is located outside the cover glass.

5. The display device according to claim 3, wherein the rear support edge comprises a first sub-edge and a second sub-edge arranged perpendicularly or obliquely to each other;
wherein the sidewall, the first sub-edge, and the second sub-edge are connected sequentially to define a sub-mounting groove;
wherein the circuit board is embedded in the sub-mounting groove.

6. The display device according to claim 5, further comprising a support pressure bar, which is abutted against a light-entry surface of the cover glass.

7. The display device according to claim 6, wherein the support pressure bar is bent to define an embedded groove portion;
wherein the rear support edge and the circuit board are embedded in the embedded groove portion respectively.

8. The display device according to claim 2, further comprising a support pressure bar;
wherein the support pressure bar, the cover glass, the filter element, and the front decorative edge are sequentially pressed together along the display direction of the display device.

9. The display device according to claim 8, wherein the support pressure bar is adhesively fixed to a light-entry surface of the cover glass.

10. The display device according to claim 2, wherein the circuit board is parallel to the cover glass.

11. The display device according to claim 2, wherein the filter element comprises a first light-guiding portion, a reflection portion, and a second light-guiding portion which are sequentially arranged;
wherein the first light-guiding portion is arranged towards the infrared component, while the reflection portion is configured to reflect infrared light between the first light-guiding portion and the second light-guiding portion, and the second light-guiding portion is pressed against a light-exit surface of the cover glass.

12. The display device according to claim 11, wherein a surface of the first light-guiding portion facing the infrared component is parallel to the light-exit surface of the cover glass, a surface of the second light-guiding portion away from the reflection portion is perpendicular to the light-exit surface of the cover glass, and an included angle between the reflection surface of the reflection portion and the light-exit surface of the cover glass is 45 degrees.

13. The display device according to claim 2, wherein the filter element and the front decorative edge are abutted or arranged apart.

14. The display device according to claim 2, wherein the filter element and the cover glass are abutted or arranged apart.

15. The display device according to claim 1, further comprising a display screen, with a light-entry surface of the cover glass facing the display screen.

16. The display device according to claim 1, further comprising a middle frame, wherein the middle frame supports the cover glass.

17. The display device according to claim 1, further comprising a foam member disposed between the middle frame and the cover glass.

18. The display device according to claim 1, further comprising a backplate, wherein the front frame assembly is arranged on the backplate.
